# EUROPEAN PATENT APPLICATION

(11) **EP 3 312 788 A1**
(43) Date of publication of application: **25.04.2018**
(21) Application number: 16194653.8
(22) Date of filing: 19.10.2016
(51) Int. Cl.: G06Q 30/02

(54) **METHOD, SYSTEM AND DEVICE FOR UPDATING A USER ACCOUNT USING A CREDIT OBTAINED BY PLAYING AN ADVERTISING CONTENT**

(71) Applicant: Nagravision S.A., 1033 Cheseaux-sur-Lausanne (CH)
(72) Inventor: LE PELERIN, Alain, 1020 Renens (CH)
(74) Representative: Leman Consulting S.A.

(57) **Abstract**

A method for updating a user account (42) at a service provider (40) using at least one credit (12) obtained by playing an advertising content (15) to be transmitted from a media server (10) to a user device (20) identified by a device identifier (21) designed to identify said user account and a record (32) stored in a database (30) configured to be connected to the media server. This method comprises:
a registration phase for populating the record with a service provider application identifier (41) assigned to said user account;
an identification phase for receiving the device identifier at the media server;
a crediting phase for:
activating, during the playing of the advertising content, a user device credit indicator (22);
activating the detection of a crediting condition (23) required to obtain said credit;
transmitting to the service provider, crediting information (24);
updating the user account thanks to said crediting information.

## Description

### BACKGROUND

The present description relates to media content consumption, in particular the playing of advertising content provided by a media server on a user device such as a tablet computer, a smart phone or a computer for example.

Today, the use of the Internet gives the possibility to easily have free access to media content such as audio and/or video content. For example, a user browsing a global video-sharing website, such as YouTube, can find and play audio-video content, e.g. video clips, TV clips, music videos, video blogging and many other media content. Acting as media server, such a very popular hosting website is also seen as an ideal platform for advertisers aiming to suggest advertising content. Accordingly, advertisers have interest to find agreements with media servers so that they broadcast advertising at least occasionally. As advertising provides financial revenue to the media server owners, it is usually not hard to find an agreement with advertisers. However, to remain popular, the media server should not provide advertising in a binding way for the end-user. For this reason, the advertising content that is sometimes played before the requested media content can usually be skipped after a short timeframe. Typically, after 5 seconds, the user can e.g. activate a so-called "Skip ad" button displayed on the user device. For obvious reasons, if the user has the possibility to skip the advertising, it is very likely that this opportunity will be used.

Accordingly, there is an interest for the advertiser to enable, as long as possible, the playing of the advertising on the end-user device, despite the ongoing possibility for the end-user to skip the advertising.

### SUMMARY OF THE PRESENT SOLUTION

To address this concern, the present description suggests a solution that is designed to be implemented by a computer system and that is based on the transfer of credits on a user account. This transfer takes place when the advertising content is played on the user device and crediting conditions are met.

More specifically and in accordance with one embodiment, the present solution suggests a method for updating a user account at a service provider using at least one credit obtained by playing an advertising content transmitted from a media server to a user device. This user device is identified by a device identifier (device ID). The device ID is linked to the user account and is kept identifiable in a database that is made available to the media server.

According to a first embodiment, this method comprises:
a registration phase for:
   - populating a record, assigned to the device ID within the database, with at least one service provider application identifier (SP application ID) linked to the user account;
an identification phase for:
   - transmitting the device ID from the user device to the media server;
a crediting phase for:
   - transmitting and playing the advertising content on the user device,
   - activating, during the playing of the advertising content, a credit indicator on the user device; this credit indicator informing that at least one credit, in connection with at least one of the SP application ID, can be obtained by playing the advertising content;
   - activating the detection of at least one crediting condition to obtain the credit, this crediting condition being related to the playing of the advertising content;
   - if the crediting condition is met, transmitting to the service provider, crediting information comprising: the credit, or data to derive the credit, and data to identify the user account;
   - updating the user account on the basis of the crediting information.

The method of the present description may be used for earning rewards released by the media server through media content, such as advertising content, to be played on the user device.

Preferably, the crediting condition is based on the playing of the advertising content on the user device. Still preferably, the crediting condition is further based on a user input received by the user device, preferably during the advertising playing.

According to another embodiment, the present solution further involves a management center for managing at least the data which have to be stored, read out or updated in the database.

According to a still another embodiment, the present solution also involves an advertiser as an entity which may be regarded as the owner of the advertising and which may have an interest in the kind of credit delivered to the user account.

Thanks to the present solution, credits can be earned and may be cumulated on a user account as compensation of playing the advertisement content on the user device under specific conditions. Still advantageously, the credits are specifically dedicated to be used with targeted applications, namely applications which represent an interest for the end-user. These applications are also referred as service provider applications (SP applications). Alternatively, the credits may be used to get other services made available by the service provider. For example, credits may be used to take advantage of hardware or computing resources whose access is at least made available by the service provider. On a beneficial basis, the present solution provides a win-win situation since both the advertiser and the end-user can be finally satisfied.

Other advantages and embodiments will be further disclosed in the following detailed description which also relates to a device and a system for implementing the method according to any of its embodiments.

### BRIEF DESCRIPTION OF THE DRAWINGS

To solution and the embodiments suggested in the present description will be better understood with reference to the attached figures in which:
Figure 1 schematically depicts the entities and data exchanges involved in a system according to a first main embodiment compliant with the solution of the present description.
Figure 2 schematically depicts a variant of Fig. 1 as a second main embodiment.
Figure 3 schematically depicts the entities and specific data exchanges involved in a system including a management center in accordance with a third main embodiment based on the embodiments of Fig. 1 or 2.
Figure 4 is a schematic representation of the entities and data exchanges involved in a system according to a fourth main embodiment.
Figure 5 schematically show the entities and data exchanges involved in a final phase of the method according to another embodiment compliant with the solution of the present description.

### DETAILED DESCRIPTION

In the following detailed description, the present solution is disclosed through several subject-matters and embodiments which should be taken as non-limitative examples.

### Main entities of the present solution

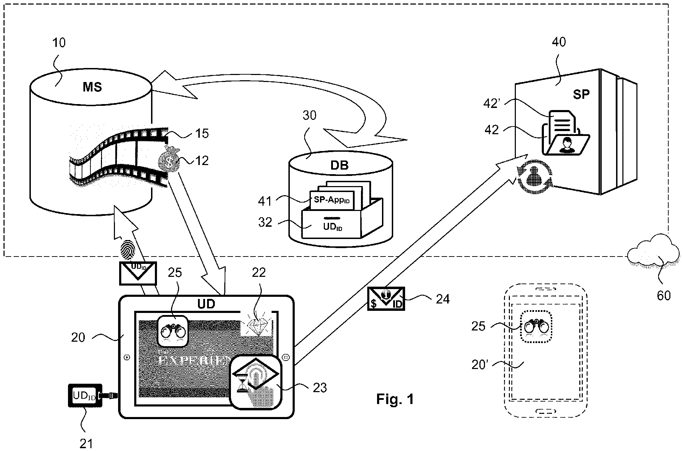

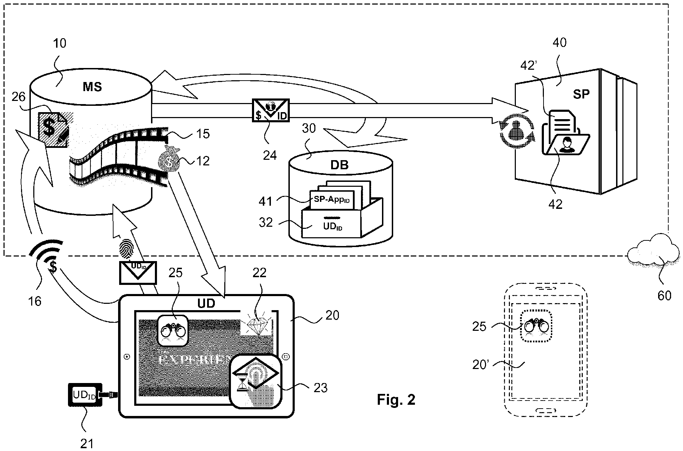

Referring to Figs. 1 and 2, the main entities playing a significant role in the present solution are the following:
The media server MS 10 can be regarded as the source of the media content, i.e. an entity that can provide media content such as audio and/or video content to end-user device(s). The media server can be compared to the YouTube global video-sharing website or to any website or platform suitable for delivery media content. Preferably, the media server 10 is a remote server to which end-user devices can connect to get media content. Media content can be delivered by any manner, e.g. by streaming or by downloading the content before its playing. Furthermore, any routing scheme such as broadcast, multicast or unicast schemes may be applied for delivering the content to the end-user device(s).

The user device UD 20 is a device, an apparatus or a media system that acts as a receiving and playing entity for the media content. The receiver and the player can be two separate entities or can be part of the same entity. Typically, the user device is a tablet computer, a smart phone, a portable media player, a personal computer, a media system such as a set-top-box and a television, or any other similar entity or combination of units suitable for receiving and playing the media content.

The database DB 30 is a storage device suitable for storing at least identifiers, such as device IDs, and data records belonging to different units or entities. These records are preferably identified as belonging or as assigned to these entities e.g. through device IDs. The database is made available to the media server 10. This means that the media server has access to the database for example to read, write or erase data or records thereof. According to one embodiment, the database may further be available to some other entities, for example to the service provider or to the user device through a dedicated application. Any of these accesses can be a direct access or can be made available via a specific entity. The database can be part of the media server or a management center. In variant, the database can be linked or connected to the media server or to the management center. Accordingly, the database can be considered as being a remote storage means relative to the end-user's environment.

The service provider SP 40 is an entity in which the end-user has a user account or a client account. Typically, the user account may be assigned to at least one device of the user, such as the user device, and/or to at least one SP application installed on at least one device of the user. The service provider may be a commercial company such an online store available through a website or a platform to which the user can log using user account data in order to buy or to obtain items and/or services. The service provider may also be regarded as an entertainment provider suitable to give access to video games through a user account. The user account may be used for example to obtain the video game, to play alone or online with other players, to update the player's score and/or to get access to additional levels or parts of the game. Any other purpose may also be considered.

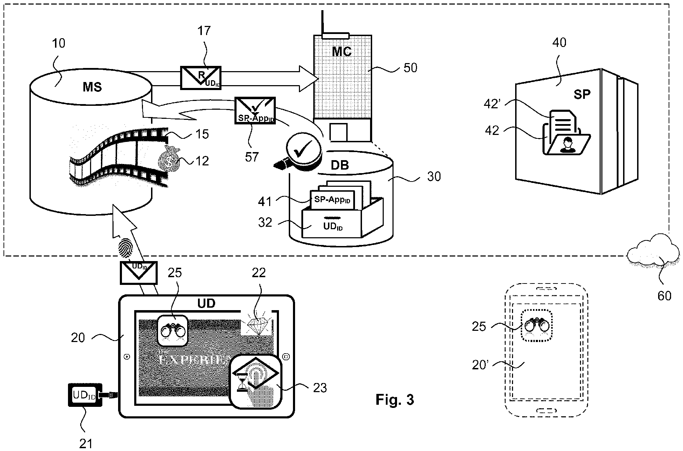

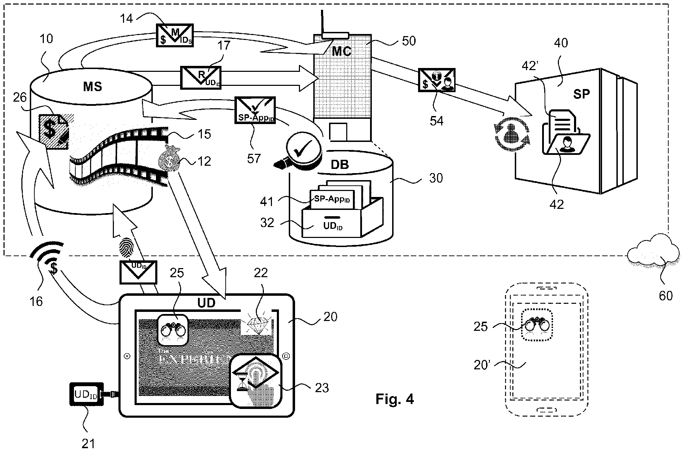

As shown in Figs. 3 and 4, the management center MC 50 may also be considered as a main entity playing a significant role according to other embodiments. In these Figures, the management center is preferably associated to the database 30 in order to manage requests, messages, information or any other data exchanges involving at least some of the other entities. Accordingly, the management center is preferably designed to manage data of the database and may also be regarded as an entity that manages and keeps data of the database safely.

As shown in the attached Figures, the media server 10, the database 30, the service provider 40 and the management center 50 are preferably remote entities that may be interconnected or at least accessed via a communication network such as the Internet for example. For this reasons these entities are schematically placed within a rectangle drawn in dotted line symbolizing a cloud 60 within a communication network context.

### First main embodiment

According to the first main embodiment shown in Fig. 1, the present solution discloses a method for updating a user account 42 at the service provider 40 using at least one credit 12 obtained by playing a media content transmitted from the media server 10 to the user device 20. More specifically, the user account 42 is updated in a memory of a computer-based service provider 40 and the media content 15 is designed to be transmitted from the media server 10 to the user device 20.

Preferably the media content is an advertising content 15 or comprises at least such an advertising content. Still preferably, the media content or the advertising content 15 is an audio-video content. However, audio content may also be used as media content or as advertising content, in particular if the user device 20 is an audio device or any device or system which would be particularly suited to receive and play audio content. In the following description the media content 15 will be referred as advertising content as non-limitative example.

The credit 12 is schematically depicted by a purse of dollars that can be obtained as rewards or gift through the advertising content 15. It may correspond to sum of money or to a price discount and, for instance, may be assimilated to a promotion or a coupon that may be redeemed later. The credit 12 may represent a commercial value and may be assimilated to a bonus or a reward. However, depending on what it is intended for, this credit may have no commercial value. For example, this credit may refer to points that can be earned in a video game or to advantages such as boosting features or special powers that may be used later in such a game. It may also give access to additional features, e.g. by unlocking some functionalities. Such functionalities may involve virtual features, such as supernatural powers, that can be used e.g. in a game as special advantages.

However, according to another embodiment, these functionalities may also relate to hardware functionalities such as computing resources. For example, the credit may give access to a disk space, typically to an extension of storage space assigned to the user e.g. in a cloud. Other computing resources may be gained through the credit, such as additional memory (e.g. additional RAM - Random Access Memory) or processors in order to increase the available computing power assigned to the end-user, either in the cloud at the service provider, or locally at the user device.

The user device 20 is identified by a device ID 21 which is schematically depicted by a luggage label marked "UD_{ID}". This device ID 21 is linked to the user account 42, in particular through a record identifier, data comprised in such a record or through a user identifier (user ID) for example. In addition, the device ID 21 is made identifiable in the database 30. For example, it may be stored in the database or may be used as an identifier of a record of the database.

The method of the present solution comprises several phases which will be now described.

According to this embodiment, the method comprises a registration phase as a first phase. The registration phase is used for populating a record 32 with at least one SP application ID 41. The record 32 is assigned to the user device 20, in particular to the device ID 21 within the database 30 which is preferably configured to be connected to the media server 10. Accordingly, the database 30 may comprise as many records 32 as there are user devices 20. Preferably, the record 32 is identifiable thanks to the device ID 21, as schematically depicted by a box which is labeled "UD_{ID}" and which contains sheets, each representing one SP application ID 41. Generally speaking, the device ID 21 may be designed to identify the user account 42 and the record 32 stored in the database 30.

The SP application ID 41 refers to an SP application's identifier recognized by the service provider 40, for example because it refers to an SP application that can be run via this service provider. In the present description, the term "application" is not limited to a computer program or software, such as a game, but may also include a web site or any other platform from which functions, resources, tasks or activities are available to the end-user. Accordingly, the SP application ID 41 may refer e.g. to the name of a software application, to the web link of a web site, to the address of a platform as that mentioned above, or to any means suitable to identify an SP application in any desired way. In the same way as for the device ID 21, the SP application ID 41 is preferably also linked to the user account 42, for example it may be assigned to the user account 42.

Given that the registration phase aims to populate a record with SP application IDs of SP applications having an interest for the end-user, this phase is not necessarily executed each time an advertising content is transmitted to the user device 20, but it may be executed at regular time intervals or from time to time, for example each time a new application or a new SP application is installed or stored in the user device.

The next phase described in the present description is the identification phase. This phase primarily aims to transmit the device ID 21 from the user device 20 to the media server 10, so that the media server knows the identity of the user device to which it is connected. The device ID 21 may be received by the media server 10 through a communication link. This operation can be performed by sending a message, as schematically depicted by the envelope on the arrow drawn from the user device and pointing towards the media server 10. This phase may be executed only once per session, for example each time the user device 20 wants to connect to the media server at the beginning of a session for receiving media content to play.

Preferably once the identification phase is achieved, the method may undertake the crediting phase. The advertising content 15 is preferably transmitted and played on the user device during this phase, as schematically depicted by the arrow pointing to the user device 20 from the media server 10 and by the content displayed on the user device.

Preferably, the crediting phase aims to activate a credit indicator 22 on the user device 20. This step may be performed e.g. by triggering a first signal through the playing of the advertising content on the user device 20. The credit indicator 22 may be regarded as a so-called "user device credit indicator" but, for simplification, the following description will refer to a so-called "credit indicator". In the attached Figures, the credit indicator 22 is schematically represented by a diamond and aims to inform the end-user that a credit 12 is obtainable. More specifically, the credit indicator 22 informs that at least one credit 12, in connection with at least one of the SP application ID 41, can be obtained by playing the advertising content 15. The credit indicator may be regarded as a reward indicator enabling to gather at least one reward, credit or bonus for a SP application identified by a SP application ID.

Preferably, the credit indicator informs the end-user that the credit 12 can be obtained by leaving the user device to play the current advertising content 15. Accordingly, the credit indicator 22 is preferably displayed over the advertising content like an overlay. Still preferably, the credit indicator appears at an early stage at the beginning of the advertising content. For example, if the advertising content comprises means for skipping the ad, as the "Skip ad » button, the credit indicator will preferably activated before such a means becomes operational. Accordingly, the credit indicator may be activated e.g. during the first five seconds of the advertising content. According to one embodiment, the credit indicator may be activated more than one time during the playing of the advertising content. For example, the credit indicator may be activated each time a credit 12 can be obtained. Therefore, several credits 12 may be offered to the end-user along the playing of the advertising content, namely during the time interval between the beginning and the end of the playing of the advertising content.

Preferably, the credit indicator is an icon that is displayed on the screen of the end user device 20. Nevertheless, the credit indicator may be a sound that is played by the end user device or it may be both an icon and a sound. Accordingly, the verb "to activate" may refer "to display" and/or "to ring" depending on the nature of the credit indicator. In variant, the credit indicator may further comprise additional information, e.g. short text information.

Still preferably, the credit indicator is typical of the SP application for which the dedicated credit 12 can be obtained. Advantageously, the end-user may be able to recognize, through the credit indicator, the SP application for which the credit 12 is offered. To this end, the credit indicator may have a specific appearance that enables the end-user to identify the underlying SP application. If the credit indicator is a sound, this sound may be specific so that the end-user is able to identify the SP application to which said sound refers. Accordingly, this specific sound may be regarded as a sound logo or a sonic signature which is or may become a familiar sound associated to a relevant SP application. The same is true if the credit indicator is an icon, a pictogram or any symbol which is quickly recognized as referring to a specific SP application. Furthermore, if the credit indicator is a displayable indicator it may provide an indication about the amount of the credit 12 that can be obtained. For example, the diamond shown as example in the Figures may further comprise a number like "10", so that one can understand that e.g. 10 points or a discount of 10 percent can be obtained or are involved through this credit indicator.

The crediting phase further comprises a step for detecting a crediting condition 23 to obtain the credit 12. More specifically, this step aims to activate the detection of at least one crediting condition to obtain the credit 12. This can be carried out by triggering a second signal enabling the detection, at the user device 20, of the crediting condition 23 which is required to obtain the credit 12. In the attached Figures, the crediting condition 23 is schematically depicted by a pictogram showing an hourglass and a finger touching a rhombus. This rhombus represents a conditional symbol in diagrams usually illustrating algorithms or flowcharts of computer programs. The finger suggests that the crediting condition may be satisfied by a touch action, whereas the hourglass suggests that the crediting condition may depend on duration, in particular the playing duration of the advertising content. Generally speaking, the crediting condition 23 relates to the playing of the advertising content given that both the time, during which the advertising content has been played, and any user input, received by the user device to obtain the credit, are dependent on the playing of the advertising content. Indeed, in the first case the condition will directly depend on the playing duration, and in the last case, it should be noted that such user input will occur because the credit indicator has been activated and its activation occurs during the playing of the advertising content.

The crediting phase further comprises a step for checking if the crediting condition 23 is met, e.g. by using a logical unit at the user device. If so, crediting information 24 is transmitted to the service provider 40. The latter may be identified by a service provider ID which may be a digital address usable to reach the service provider 40. Preferably, the step aiming to send crediting information to the service provider may be executed if a user input has been detected at the user device or if the media server has been played on the user device during a playing duration longer than a minimum value.

In the embodiment shown in Fig. 1, crediting information is transmitted as a message sent from the user device 20 to the service provider 40. Crediting information 24 comprises the credit 12, or data to derive this credit, and data to identify the user account 42. Data to derive the credit may refer e.g. to points if the credit is counted in another unit such as in US dollars for example. Accordingly, thanks to a converting table or process, it may easily possible to derive the credit from any data used as derivation data. As another example, data to derive the credit may refer to the number of times that the end-user has touched the touch screen of the user device. More specifically, it may refer to the number of times the end-user have touched a specific area of the user device. Such an area may be limited to the area required to display the credit indicator, or it may be extended e.g. to an area around this credit indicator. According to still another example, data to derive the credit may refer to a time or duration, for example the duration that the advertising content has been played on the user device. Such a duration may be easily converted e.g. in points, bonus, or money in order to derive the credit. Data to identify the user account may be any suitable data, for example a user account identifier (user account ID), the device ID 21 or the user ID.

Finally, the last step of the crediting phase aims to update the user account 42 on the basis of the aforementioned crediting information. In other words, this means that the credit provided to the service provider through the crediting information is added to the user account, the latter being identified thanks to data specifically dedicated for its identification. If the user device comprises more than one SP application of the same service provider 40, it may be possible to have one user account 42 for each of these SP applications. Alternatively, the user account 42 may have several sub-accounts 42', in particular one sub-account 42' for each SP application. In this case, when the user account 42 is updated, it is more specifically the relevant sub-account 42' which is updated.

Preferably, the crediting condition 23 is based on the playing duration of the advertising content 15 on the user device 20. For example, the crediting condition 23 may be met if the entire advertising content is played on the user device, preferably in a continuous manner from the beginning to the end. According to another aspect, the credit value or amount may depend on the playing duration. For example, the longer playing duration is, the higher value of the credit will be. Accordingly, the credit value may be e.g. proportional to the playing duration of the advertising content on the user device.

In this regard, it should be noted that a single credit may be suggested per advertising content. Such a credit may have a variable value depending on the playing duration of the advertising content. Alternatively, the number of credits per advertising content may increase in accordance with the playing duration. For example, a credit may be obtained at regular time interval, e.g. every 10 seconds, during the playing of the advertising content. This time interval may also be irregular, e.g. defined on a random basis or according to a specific rule.

In addition, a subsequent credit may be offered only if the crediting condition 23 assigned to the previous credit has been met. In variant, credits may be offered regardless the outcome of the credit condition assigned to the previous credit(s). Accordingly, several credits may be simultaneously suggested by activating several credit indicators during the playing of the advertising content on the same user device.

As briefly suggested above, the crediting condition 23 may be based on a user input received by the user device 20 during the playing of the advertising content. For example, the user input may relate to an action undertaken by the end-user via a user interface of the user device 20. Typically, the user interface may be the touch screen, the keypad or the front-facing camera of the user device. Accordingly, the user input may correspond to a pressure on a specific area of the screen, e.g. on the displayed credit indicator or it may correspond to a specific key of combination of keys such as a word or a sentence inputted through a key pad. Furthermore, the simple fact to stand in front of the aforementioned camera may also be assimilated as a user input, especially if the user device is able to detect the presence of the end-user.

According to a further aspect, it should be noted that if the credit indicator refer to an icon or a pictogram that can be displayed on the user device, such a credit indicator may be displayed at variable locations on the display screen of the user device. Such a feature may advantageously help to keep the attention of the end-user on the displayed content, especially on the advertising content.

Reverting to the registration phase, there are several possible ways to populate the record 32 of the database 30 with at least one SP application ID 41. The SP application ID and/or the service provider ID can be considered as service provider ID data. According to a first way, the user device 20 may connect to the database 40, either directly or via an entity such as the media server 10 for example. Populating the record 32 may be performed under the end-user's initiative, upon request of the database 30 or upon request of any entity connected to the database either permanently or temporarily. For example, the media server 10 or another entity may regularly request to the user device to update its record 32.

According to another way, the populating of the record 32 is performed by the user device 20, for example thanks to a dedicated application. Such an application may be a discovery application 25 which is schematically illustrated in the Figures by a pair of binoculars. The discovery application 25 may be configured to be run on the user device for automatically searching new applications or new SP applications installed on the user device and reporting the relevant SP application IDs to the database 30. Accordingly, the operation aiming to populate the record 32 may be undertaken by the discovery application 25 by connecting the user device 20 to the database 30, either directly or indirectly, e.g. via an entity such as the media server or any other entity connected to the database.

The discovery application may be set to undertake a scan of the user device 20 at regular time intervals for searching any SP application ID or any newly installed SP application ID. Alternatively, the discovery application may be set to scan the user device 20 upon request of the end-user, upon request of the database 30 or upon request of any entity connected to the database. According to another embodiment, the discovery application 25 may be set to scan the user device 20 each time a new application or SP application has been installed on the user device. In all cases, the discovery application 25 aims to report at least the SP application IDs, e.g. in a form of a list, in order to populate the relevant record 32 of the database 30. Preferably, the device ID 21 and/or the user ID is/are also transmitted to the relevant entity by the discovery application 25.

As the SP application IDs identify SP applications such as computer programs or software or any web site or platform accessible from any user device, it should be noted that SP applications may be installed on at least one other user device, also referred as second user device 20', which is distinct from the user device 20 onto which the advertising content is played. For example, the end-user may use a tablet computer as user device 20 for playing media content provided by a media server 10 such as YouTube. On the other hand, this end-user may use a second user device 20', such as a smart phone depicted in dotted line in the attached Figures, for playing SP applications such as games for example. Accordingly, the SP application IDs may be stored in at least one second user device 20' that is distinct from the user device 20. For this reason, the discovery application 25 may be run on at least one other user device 20' comprising at least one SP application ID 32 or that is likely to comprise at least one SP application ID.

According to one embodiment, the identification phase may further comprise an authentication step for authenticating the device ID 21 when it is transmitted from the user device 20 to the media server 10. Such an authentication step is schematically illustrated in Figs. 1-4 by a fingerprint on the arrow pointing to the media server 10 from the user device 20. The authentication step aims to increase the security level of data, such as the user device ID 21, transmitted from the user device to the media server. The authentication step may comprise a request for entering a password using the user device. This password may be transmitted to the media server 10, e.g. together with the user device ID 21 in the same message, in order to be checked by the media server 10. If the password received by the media server 10 is valid, the latter may accept the user device ID 21. Alternatively or in addition, other personal data may be requested and checked. For example, the end-user may be requested to enter his date of birth or biometric data instead of a password or in addition to the password.

According to another way, the authentication step may request to send an identification code, such as a one time authorization code, received by the end-user through another channel. Such a code may be transmitted from the media server 10 to the end-user area via another network. For example, the media server may transmit the code via an SMS, namely via a Short Message Service, using a mobile phone network. The SMS may be received by the smart phone of the end-user. Such a transmission may occur during the identification step, especially before the transmission of the user device ID 21. The latter can then be transmitted in the message addressed to the media server by the user device, for example together with the code that has been received on a distinct apparatus. Finally, this code can be checked by the media server to authenticate the user device 20.

According to another way, the authentication step may comprise a digital signature attached to the used device ID 21 transmitted to the media server. Such a signature may be obtained e.g. by applying a hash function onto at least the user device ID in order to obtain a digest and then by encrypting the digest using a signer's private key. The receiver, namely the media server 10, can obtain the public key of the signer's private key in order to decrypt the encrypted digest. By using the same hash function, which may be a secret function shared only with the user unit 20, the media server may apply this function onto the same data as those used to obtain the digest. Accordingly, it is able to compare the digest with the result provided by its hash function. If there is a match, the message comprising at least the user device ID and the digest is an authentic message.

### Second main embodiment

Referring now to Fig. 2, the latter shows as a second main embodiment a variant of the embodiment depicted in Fig. 1. This variant mainly concerns the crediting information 24, because instead of being directly transmitted from the user device 20 to the service provider 40 as shown in the example of Fig. 1, crediting information 24 is transmitted by the media server 10 to the service provider 40. More specifically, crediting information 24 is transmitted by the media server 10 after having received, from the user device 20, at least one signal 26 for crediting a user device account 16 with a credit 12 at the media server 10. The user device account 16 is assigned to the device ID 21 and can be stored as a record in a database within the media server or connected to the media server as the database 30. Accordingly, the record 32 of the database 30 may also be used for storing the user device account 16.

The signal 26 can be transmitted through the same communication network as that used for transmitting the device ID 21 from the user device 20 to the media server 10. Alternatively, the signal 26 can be transmitted via another network, e.g. via a mobile phone communication network within a SMS addressed to the media server.

The signal 26 may have the form of a message comprising the credit 12 that can be obtained by the advertising content 15 on the user device 20 when the crediting condition is met. If more than one credit 12 is obtained by the user device 20 during the playing of the advertising content, the credit transmitted through the signal 26 may correspond to the sum of credits 12 accumulated by the user device during the playing of this advertising content. The user device account 16 may be regarded as a counter suitable to calculate the sum of several credits 12. The credit to which the crediting information 24 refers is based on the credit of the user device account 16. Accordingly, this credit can be a single credit 12 or the sum of a plurality of credits 12 accumulated on the user device account 16.

In one embodiment and in the same way as for the crediting information 24, the signal 26 may comprise data to derive the credit instead of the credit itself. Accordingly, the signal 26 may comprise e.g. the playing duration of the advertising content on the user device or any data depending on such playing duration.

Advantageously, by transmitting the crediting information 24 from an entity other than the user device 20, e.g. from the media server 10 as shown in Fig. 2, it is possible to control the content of information transmitted to the service provider 40. This way of doing may be particularly efficient, especially in the case where there is a risk that the user device 20 is corrupted or may be corrupted. The corruption of the user device may be intentional, for example to unduly increase the credit to which the crediting information 24 refers. Nevertheless, such an issue may also be reduced by transmitting data to derive the credit instead of the credit itself and provided that the link between such data and the credit is not obvious.

### Third main embodiment

Compared to the two previous main embodiments, it is primarily the specific features of the third embodiment which are depicted in Fig. 3. For this reason and for simplification, at least some features depicted in Fig. 1 or in Fig. 2 are not shown in Fig. 3.

The third main embodiment includes the management center 50 that is mainly tasked with the management of the database 30. Indeed, according to certain embodiments, the database 30 may be unable to manage itself its data, and neither the media server 10, nor the service provider 40 may be intended or configured to manage data stored in the database 30. Accordingly, the identification phase may further comprise the following steps:
- sending an identification request 17 from the media server 10 to the management center 50, this identification request comprising at least the device ID 21;
- checking, by the management center 50, if the device ID 21 is identified in the database 30. If so, transmitting a positive response 57 to the media server 10. Preferably, the positive response 57 comprises at least one of the at least one SP application ID 41 stored in the record 32 assigned to the device ID 21.

Advantageously, by checking the device ID 21 during the identification phase, for example by checking if the device ID 21 is identified in the database 30, it is possible to verify if the end-user is interested by receiving credit 12 for playing advertising content and/or to verify if the user device 20 is configured for this purpose. Accordingly, the present method may be applied in a global manner, e.g. in an automatic way, to any user device connecting to the media server 10 without disturbing the end-user with unwanted rewards or credits. Indeed, if the end-user does not want to receive credits 12 as rewards for playing advertising content on his user device 20, the latter will simply be not identified in the database 30 as it is usually done during the registration phase. Consequently, no SP application ID will be transmitted to the media server in response to the identification request. The activation of the credit indicator 22 during the crediting phase may be performed under certain conditions. For example, this activation may be effective only if a positive response 57 is received by the media server from the management center 50 or only if this positive response 57 comprises at least one SP application ID. This also means that the activation of the credit indicator 22 is not performed in the case where the device ID has not been registered with the management center 50 or has not been identified in the database 30.

### Fourth main embodiment

The fourth main embodiment is shown in Fig. 4 and is based on the third embodiment of Fig. 3.

According to this fourth embodiment, the crediting information 24 is transmitted via the management center 50 by sending, from the media server 10 to the management center 50, a credit message 14, and then by transmitting, from the management center 50 to the service provider 40, earning information 54. As schematically depicted in Fig. 4, the credit message 14 comprises at least the device ID 21, the SP application ID 41 and the credit of the crediting information 24 shown in the previous Figs. 1 and 2. On the other hand, earning information 54 comprises the credit of the aforementioned crediting information 24 and data to identify the user account 42. As mentioned previously, data to derive the credit of the aforementioned crediting information may also be used instead of the credit of the crediting information.

Advantageously, the management center 50 may be used as a trust entity for managing sensitive data exchanged e.g. with the service provider 40 and/or with the media server 10. Thus, the management center also helps to prevent any transmission of fraudulent data to the service provider 40. Still advantageously the management center 50 may also be used to efficiently reduce the workload and/or the computing resources at these entities by handling and ensuring tasks that are not primarily intended to be performed by entities such as the media server or the service provider.

According to one embodiment, the SP application IDs 41 identified by the discovery application 25 may be transmitted to the database 30 via the management center 50.

### Final phase

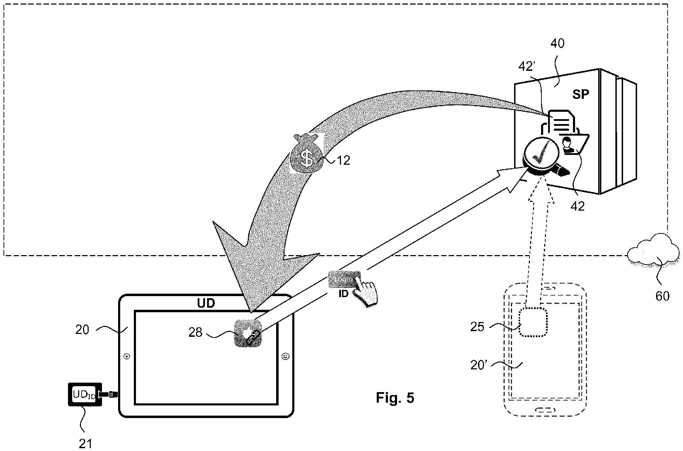

The final phase is a phase that may be applied to any embodiment. This phase remains optional because there is no requirement to use the credit cumulated at the user account 42. The final phase is schematically shown in Fig. 5. This Figure is focused on the entities and data exchanges which are especially involved in this final phase. The main goal of the final phase is to use the credit of the user account 42, or to use the credit of the sub-account 42', especially if the user account 42 is used for storing several credits assigned to several SP applications. Preferably, the use of the credit may be regarded as the offer, the presentation or the usage of the credit as reward usable with the relevant user device, namely the user device 20 or the second user device 20'. The use of this credit may take the form of a suggestion presented to the end-user via the relevant user device. Accordingly, if the end-user does not wish to spend this credit, the latter may further be used afterwards.

It should be noted that this final phase may be undertaken at any time. Accordingly, this phase preferably comprises a step for logging the user device 20, or the second user device 20', with the service provider 40. This step can be automatically executed when the relevant user device 20, 20' connects to the service provider 40, e.g. for running the SP application.

To these ends, the final phase may be regarded as a phase for:
- logging the user device 20, or any second user device 20' comprising at least one SP application ID, to the service provider 40 using data linked to said user account 42,
- checking by the service provider 40 if said user account 42 comprises an available credit, and if so, using this credit through a service made available by the service provider 40 or at least made available by this service provider.

Data used for the logging step may typically be the user ID or the device ID 21.

Preferably, the first step of this final phase is undertaken in view to run an SP application identified by one SP application ID among the SP application IDs linked to the user account 42.

Still preferably, the second step of this final phase may be to check, by the service provider 40, if the user account 42 comprises an available credit for the aforementioned SP application 28.

In one embodiment, the service made available by the service provider may be the SP application. Alternatively, such a service may be regarded as being at least an access to hardware or computing resources. Such resources may concern the availability of a disk space for data storage, e.g. the allocation of an additional disk space, and/or the availability of higher computing power, such as higher computing performances provided e.g. through additional RAM or better CPU performances. Accordingly, an end-user which consumes advertising content 15 may accumulate credit on his user account 42 which, in turn, may be used to gain hardware resources or computing resources made available by the service provider.

In one embodiment, the aforementioned hardware or computing resources are located on the service provider side, typically somewhere in the cloud 60.

According to another embodiment, such hardware or computing resources are located in the user device 20, 20'. For example, these resources may be physically present in the user device but may be in a locked state, typically since the time of purchase of the user device or since its first use. In this case, unlocking or activation of at least a part of these resources may be considered as a service offered by the service provider 40. Such a service would be typically suggested if the user account 42 comprises an available credit, preferably a available credit which is sufficient for such a service. Unlocking hardware or computing resources in the user device may be achieved for example by receiving an activation code from the service provider when the credit is used. The activation code, or any data to derive such a code, should be defined in advance e.g. during the manufacture or the personalization of the user device or during its first use. Such an activation code may be secret.

In Fig. 5, the use of the credit in the SP application is schematically depicted by an arrow pointing to an SP application 28 from the service provider 40, in particular from the user account 42 of this service provider. This arrow schematically shows the transfer of the credit 12 stored in the user account 42. It should be understood that this credit 12 may also be a sum of credits 12 cumulated on the user account 42 after being received through the crediting information 24.

In variant, the transfer of this credit 12 may be replaced with other data, for example with a notification to notify the end-user that additional hardware or computing resources are available for his own needs. As appropriate, such data may refer to an activation code to unlock or activate additional hardware or computing resources within the user device. This activation code may take the form of an instruction that could be automatically read and executed by the user device. Alternatively, such a code could be manually entered into an appropriate field within the user device. Furthermore, this activation code may consist to a specific code, e.g. unique, to each user device 20, or it could be common to a plurality of user devices. In the latter case, the activation code may be preferably executed in an automatic manner by the user device upon receipt, in order to remain secret. To the same end, the activation code may be securely transmitted to the user device.

Once activated, the hardware or computing resources may remain permanently enable or they may be enabled for a limited duration or for a certain time interval. In the case they relate to resources that have been temporarily enabled, the user may still have the possibility to obtain a new credit on his user account 42, preferably a new credit that is sufficient to activate the hardware or computing resources again. If these resources relate to storage space, within the user device or within the cloud, all data previously stored on behalf of the end-user may be recovered according to a preferred embodiment.

According to one embodiment, the use of the credit may also be accompanied by a message of the advertiser who paid for the advertising content. Preferably, such a message may be an interactive message, such as a message that requires an action from the end-user. Typically, such an action may be obtained through a user-input, for example by pressing a button to confirm that the message has been viewed.

### Preliminary phase

The preliminary phase is a phase that may be applied to any embodiment comprising the management center 50. This phase is also optional because the registration of the service provider with the management center can be considered as being a pre-established fact, especially with regard to the third and fourth main embodiments. Indeed, there is no requirement to perform such a registration each time the user account 42 is updated. In addition, this preliminary phase implies the management center that appears in some of the main embodiments only.

The preliminary phase aims to register the service provider 40 with the management center 50. Accordingly, this preliminary phase may be included in the registration phase. To this end, this registration phase may further comprise a step for activating a populating condition for controlling the populating of the record 32 in the database 30. More specifically, the populating condition intends to verify that the SP application ID 41 belongs to a service provider 40 registered with the management center 50, before to be stored in the record 32. If this populating condition is met, this SP application ID can be stored in the database 30 for populating the relevant record 32.

The main goal of this populating condition is to avoid populating the records 32 with useless application IDs. Indeed, there is no interest e.g. to store in the record 32 application IDs or an SP application IDs that are no more available at the service provider 40. To avoid such a situation and save memory space, the populating condition can be advantageously be implemented before storing any application ID in the database.

### Additional embodiments

According to one embodiment, the SP application ID 41, which is linked to the credit 12 that can be obtained by playing the advertising content 15, identifies an SP application 28 approved, or preliminarily approved, by an advertiser (not shown in the Figs.) of the advertising content 15. The main goal of this feature is to suggest credits for SP applications that match with the advertiser policy. Accordingly, this feature allows to avoid suggesting credits paid by the advertiser for applications that are considered as unseemly for the advertiser such as violent games, for example.

Such a feature can be implemented by asking the advertiser if the SP application to which the SP application ID refers meets the advertiser policy. Such a request can be performed each time a new SP application ID has to be stored in the database. In variant, such request may be send to the advertiser on a periodical time basis. Alternatively, the database or the management center 50 may store a black or white list of SP applications or SP application IDs. Such a list may be established by the advertiser or at least with the advertiser's consent. Accordingly, each SP application ID may be compared to such a list before being stored in the database. Such a list may be updated, e.g. at regular time interval with the agreement of the advertiser.

According to a preferred embodiment, the credit indicator 22 is data transmitted from the media server 10 with the advertising content 15. The credit indicator may be part of the advertising content 15. Preferably, the credit indicator 22 is transmitted concurrently with the advertising content through a specific channel or a specific data stream separate from that used for transmitting the advertising content. Preferably, the user device 20 has no means to trigger the credit indicator 22, but acts as a slave device and simply displays the content as received from the media server. Still preferably, the credit indicator is activated or appears on the user device shortly after the beginning of the advertising content 15. Preferably, it is activated before the expiration of a waiting time required to activate the "Skip ad" button, if any.

Alternatively, the credit indicator 22 may be activated by the user device 20, for example in accordance with a predetermined rule based on the time elapsed since the beginning of the playing of the advertising content. Such a rule may be part of predetermined data stored in the user device or received or updated from the media server, e.g. just before receiving the advertising content or each time the user device connects to the media server.

According to another embodiment, at least some steps of the identification phase may be triggered by a specific event. For example, the transmission of the device ID 21 from the user device 20 to the media server 10 may be triggered by the receipt of the advertising content 15 at the user device 20. As another example, the sending of the identification request 17 from the media server 10 to the management center 50 may be triggered by the transmission of the advertising content 15 to the user device 20 or by the receipt of the device ID 21 from the user device 20.

According to one embodiment, the user ID disclosed in the present description may be in fact the device ID 21 of the user device 20 or the device ID of any second user device 20' onto which the related SP application has been installed. Nevertheless, the user ID may also be the name or the nickname of the user. According to one embodiment, the device ID may be the MAC address, namely a physical address which is a unique identifier assigned to the user device. Preferably, the user device 20, 20' can be reached by any entity through an IP address during a session, i.e. during a channel opened with the relevant entity.

It should be noted that the advertising content 15, a priori, has no relationship with the SP application installed on the user device. However, it may be possible for the media server 10 to select the advertising content in accordance with the SP application(s) installed on the user device. Such a selection may be performed on the basis of the SP application ID 41 stored in the record 32 of the database, e.g. on the SP application IDs transmitted through the positive response 57 during the identification phase. Alternatively, it may be possible to select the SP application ID assigned to the credit 12 among the SP application IDs stored in the record 32. Accordingly, the credit 12 offered through the credit indicator 22 may be regarded as being a credit selected by the advertiser, so that the SP application for which it is intended meets the advertiser policy or requirements.

According to one embodiment, any exchange between entities may be protected to safeguard confidentiality and/or integrity. These exchanges may relate to the transmission of the device ID 21 from the user device 20 to the media server 10, the transmission of crediting information 24, the identification request 17, the positive response 57, the credit message 14, earning information 54 or any other data exchange. It should be noted that the transmission of the credit, as reward from the service provider to the user device 20, 20', may also be protected as well as the logging operation of the user device with the service provider.

Such a protection can be obtained by using secure channels, encryption processes and/or digital signatures. The encryption process may be performed according to any encryption scheme, e.g. using symmetric or asymmetric encryption keys with any suitable algorithm. Before exchanging sensitive or relevant data, an authentication step may also be performed e.g. at the beginning of a session opened with any entity.

### System to implement the above-described method

The present solution also relates to a system for updating a user account 42 using at least one credit 12 obtained by playing an advertising content 15. This system may be configured to implement any embodiment disclosed above in connection with the related method. To this end and as shown in the attached Figures, this system comprises:
- a service provider 40 to which the user account 42 is located,
- a media server 10 for providing an advertising content 15,
- a user device 20 for receiving the advertising content 15 from the media server 10, the user device 20 being identified by a device ID 21;
- a database 30 that is made available to the media server 10; the database 30 comprising at least one record 32 assigned to the device ID 21 and designed to be populated with at least one SP application ID 41 linked to said the account 42; preferably, the device ID 21 is linked to the user account 42 and is identifiable in this database 30.

In addition, the user device 20 is further configured to:
- transmit the device ID 21 to the media server 10;
- activate during the playing of the advertising content 15, a credit indicator 22 informing that at least one credit 12, in connection with at least one SP application ID 41, can be obtained thanks to the advertising content 15;
- activate the detection of at least one crediting condition 23 to obtain the credit 12; this crediting condition 23 being related to the playing of the advertising content 15;
- check if the crediting condition 23 is met, and if so, to transmit to the service provider 40, crediting information 24 comprising the credit 12, or data to derive this credit 12, and data to identify the user account 42 for updating this user account 42 on the basis of the aforementioned crediting information 24.

Any of the entities of this system may comprise suitable communication interface for carrying out the required data exchanges.

Depending on the preferred embodiment, the database 30 can be part of the management center 50, or it may be part of the media server 10.

Furthermore and as already mentioned in connection with the method, the activation of the credit indicator 22 can simply be achieved by the receipt of this credit indicator from the media server 10. Alternatively, the user device 20 may comprise a specific activator for activating the credit indicator in due time. Of course, such an actuator will be implemented in the form of computer instruction or programming code, for instance through a specific application or software.

As already mentioned for the method, the credit 12 can be obtained, more specifically by playing the advertisement content 15 on the user device 20.

The crediting condition 23 is preferably based on the playing duration of the advertising content on the user device 20. Still preferably, the crediting condition is based on a user input received by the user device, preferably during the playing of the advertising content. The activation of the detection of the crediting condition 23 may be obtained by making at least an area of the user device display screen sensitive when touched. Preferably, this area will correspond to the suitable area for displaying the credit indicator 22. Alternatively, such activation may be obtained by turning on a microphone of the user device. Regardless the activation means used, such activation may further imply a monitoring process waiting for a user input. The monitoring process may typically be implemented by a same or similar way as that mentioned above regarding the actuator. Such a monitoring process may be linked or associated to a checking process for checking if the crediting condition is met and for triggering further actions accordingly.

According to one embodiment, the system further comprises the management center 50. The latter may be configured to:
- host the database 30;
- receive, from the media server 10, the identification request 17;
- check if the device ID 21 is identified in the database 30, and if so, to respond to the media server 10 by transmitting the positive response 57.

According to another embodiment, the media server 10 may further be configured to send, to the management center 50, the credit message 14. The latter may comprise at least the device ID, the SP provider application ID and the credit or data to derive this credit.

Furthermore, the management center 50 may further be configured to transmit to the service provider 40, earning information 54. Earning information 54 may comprise the credit of the crediting information, or data to derive the credit of said crediting information, and data to identify the user account.

In one embodiment, the user device 20, or a second user device 20', of the system may be configured to populate the records 32 of the database 30 using the discovery application 25.

According to another embodiment, at least the user device 20 and the media server 10 may each comprise an authentication unit suitable to perform authentication steps. In addition or in variant, they may comprise a cryptographic unit suitable to protect data intended to be exchanged with any entity.

According to a further embodiment, the service provider 40 is configured to comprise hardware or computing resources that may be allocated to the end-user, e.g. via the user device 20 and/or via the second user device 20'. Such resources can refer to storage space (e.g. memory such as RAM) or processors in order to increase the available computing power assigned to the end-user. Accordingly, the service provider 40 may be configured to allocate specific or individual hardware or computing resources (located on the service provider side) to each end-user or to each user device connected to the service provider. As already mentioned in the present description, the aforementioned resources can obtained thanks to the credit of the user account, especially thanks to a sufficient credit that can be redeemed for taking advantage to such higher hardware or computing resources during the final phase of the method.

In one embodiment, the user device 20 (or second user device 20') may be configured to have a part of its hardware or computing resources in a locked state, preferably since the time of purchase of the user device or since its first use. To gain access to this reserved part, the user device may be further configured to receive an activation code. As mentioned above in connection with the method, once activated, the dedicated hardware or computing resources may remain permanently enable or they may be enabled for a limited duration or for a certain time interval.

It should be noted that any other feature mentioned in connection with the method remains valid for the present system. For this reason, the description of many variants and embodiments that may be applied to the present system will not be repeated.

### Device for updating a user account in accordance with the above-described method

The present solution also relates to a user device for updating a user account 42 using at least one credit 12 obtained by playing media content 15 received on this user device. As already mentioned in connection with the method, the media content 15 is preferably an advertising content that may be transmitted by the media server 10 to the user device 20.

This user device may be configured to implement any embodiment disclosed above in connection with the related method and/or system. To this end this user device, identified by a device identifier 21, comprises:
- a communication interface configured to send the device identifier 21 to the media server 10 through a communication link;
- an activation unit configured to activate, through the playing of the media content 15, a user device credit indicator 22 informing that at least one credit 12, in connection with at least one service provider application identifier 41 assigned to said user account 42, is obtainable by playing the media content 15 on the user device 20;
- the activation unit being further configured to activate the detection of at least one crediting condition 23 required to obtain the credit 12, this crediting condition 23 being related to the playing of the media content 15;
- a logical unit configured to check if the crediting condition 23 is met, and if so, to send crediting information 24 suitable for updating said user account 42, the aforementioned crediting information 24 comprising the credit 12, or data to derive said credit 12, and data to identify said user account 42.

The activation unit may be configured to trigger a first signal enabling to activate the credit indicator 22 through the playing of the media content 15, and to trigger a second signal enabling to activate the detection of the crediting condition 23.

According to one embodiment, the crediting condition 23 is based on the playing duration of the advertising content 15 on the user device 20. Preferably, the crediting condition 23 is based on a user input received by the user device 20 through a user interface during the playing of the media content 15.

According to another embodiment, the user device 20 is configured to host and run the discovery application 25 which has been already disclosed in the present description.

In one embodiment, the user device 20 may comprise an authentication unit configured to perform any of the authentication steps disclosed in the related method.

Preferably, the user device 20 may comprise a logging unit configured to connect the user device 20 to the service provider 40, e.g. for running the SP application and/or to perform at least the final phase disclosed in connection with the method.

### Final considerations

Although an overview of the inventive subject matter has been described with reference to specific example embodiments, various modifications and changes may be made to these embodiments without departing from the broader spirit and scope of embodiments of the present invention. For example, various embodiments or features thereof may be mixed and matched or made optional by a person of ordinary skill in the art. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are believed to be described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

## Claims

1. A method for updating a user account (42), in a memory of a computer-based service provider (40), using at least one credit (12) obtained by playing media content (15), said media content (15) being designed to be transmitted from a media server (10) to a user device (20) identified by a device identifier (21),
said device identifier (21) being further designed to identify said user account (42) and a record (32) stored in a database (30) configured to be connected to the media server (10),
said method comprising:
a registration phase for:
- populating said record (32) with at least one service provider application identifier (41) assigned to said user account (42);
an identification phase for:
- receiving, through a communication link, the device identifier (21) at the media server (10);
a crediting phase for:
- activating, by triggering a first signal through the playing of the media content (15), a user device credit indicator (22) informing that at least one credit (12), in connection with at least one of said at least one service provider application identifier (41), is obtainable by playing said media content (15);
- activating, by triggering a second signal, the detection of at least one crediting condition (23) required to obtain said credit (12), said crediting condition (23) being related to the playing of the media content (15);
- checking if said crediting condition (23) is met by using a logical unit and, if so, transmitting to the service provider (40) crediting information (24) comprising: said credit (12), or data to derive said credit (12), and data to identify said user account (42); and
- updating the user account (42) on the basis of said crediting information (24).

2. The method of claim 1, wherein said crediting condition (23) is based on the playing duration of the advertising content (15) on the user device (20).

3. The method of claim 2, wherein said crediting condition (23) is based on a user input received by the user device (20) during playing of the advertising content (15).

4. The method of any of preceding claims, wherein populating the record (32) of said database (30) with said at least one service provider application identifier (41) is performed by running a discovery application (25) on the user device (20), or on at least one second user device (20') comprising at least one service provider application identifier (41), for identifying thereon said at least one service provider application identifier (41) and transmitting the latter to the database (30).

5. The method of any of preceding claims, wherein said identification phase further comprises an authentication step for authenticating the device identifier (21).

6. The method of any of preceding claims, wherein said crediting information (24) is transmitted by the media server (10) after having received, from the user device (20), at least one signal (26) for crediting a user device account (16) with a credit at the media server (10); the credit to which said crediting information (24) refers is based on the credit of said user device account (16).

7. The method of any of preceding claims, wherein said database (30) is part of a management center (50), said identification phase further comprising:
- sending an identification request (17) from the media server (10) to the management center (50), said identification request (17) comprising the device identifier (21);
- checking, by the management center (50), if said device identifier (21) is identified in the database (30), if so, responding to the media server (10) by transmitting a positive response (57) comprising at least one of said at least one service provider application identifier (41).

8. The method of claim 7, wherein said crediting information (24) is transmitted via the management center (50) by sending, from the media server (10) to the management center (50), a credit message (14) comprising at least the device identifier (21), said service provider application identifier (41) and the credit of said crediting information (24), or data to derive the credit of said crediting information (24), and then by transmitting, from the management center (50) to the service provider (40), earning information (54) comprising the credit of said crediting information (24), or data to derive the credit of said crediting information (24), and said data to identify the user account (42).

9. The method of claims 7 or 8, wherein said at least one service provider application identifier (41) identified by the discovery application (25) is transmitted to the database (30) via the management center (50).

10. The method of any of preceding claims, further comprising a final phase for:
- logging said user device (20), or any second user device (20'), comprising at least one service provider application identifier (41), to the service provider (40) using data linked to said user account (42),
- checking by the service provider (40) if said user account (42) comprises an available credit, if so, using said credit through a service made available by said service provider (40).

11. The method of any of claims 7 to 10, further comprising a preliminary phase for registering said service provider (40) with the management center (50), and wherein said registration phase further comprising:
- activating a populating condition for controlling that the populating of the record (32) of said database (30) with said service provider application identifier (41) is performed if said service provider application identifier (41) belongs to a service provider (40) registered with the management center (50).

12. The method of claim 10 or 11, wherein the service made available by the service provider is an access to hardware or computing resources.

13. A user device (20) for updating a user account (42) using at least one credit (12) obtained by playing media content (15) received on said user device, said user device (20) being identified by a device identifier (21) and comprising:
- a communication interface configured to transmit the device identifier (21) to a media server (10);
- an activation unit configured to activate, through the playing of the media content (15), a user device credit indicator (22) informing that at least one credit (12), in connection with at least one service provider application identifier (41) assigned to said user account (42), is obtainable by playing said media content (15);
- said activation unit being further configured to activate the detection of at least one crediting condition (23) required to obtain said credit (12), said crediting condition (23) being related to the playing of the media content (15);
- a logical unit configured to check if said crediting condition (23) is met, and if so, to send crediting information (24) suitable for updating said user account (42), said crediting information (24) comprising said credit (12), or data to derive said credit (12), and data to identify said user account (42).

14. The user device (20) of claim 13, wherein said crediting condition (23) is based on the playing duration of the advertising content (15) on the user device (20).

15. The user device (20) of claim 14, wherein said crediting condition (23) is based on a user input received by the user device (20) through a user interface during playing of the media content (15).
